# EUROPÄISCHE PATENTSCHRIFT

(11) **EP 1 945 017 B1**
(45) Veröffentlichungstag und Bekanntmachung des Hinweises auf die Patenterteilung: **28.09.2011**
(21) Anmeldenummer: 06807730.4
(22) Anmeldetag: 03.11.2006
(51) Int. Cl.: A01D 43/08, B02C 4/30

(54) **ZERKLEINERUNGSEINRICHTUNG FÜR ERNTEGUT**
ARRANGEMENT FOR COMMINUTING HARVESTED CROPS
DISPOSITIF DE DECHIQUETAGE DE RECOLTES

(30) Priorität: 04.11.2005 DE 102005053092
(43) Veröffentlichungstag der Anmeldung: 23.07.2008
(60) Teilanmeldung: 11006301.3
(73) Patentinhaber: Innova 6. Beteiligungsgesellschaft mbH, 51643 Gummersbach (DE)
(72) Erfinder: OTTERSBACH, Hans, 51580 Reichshof-Erdingen (DE)
(74) Vertreter: Rebbereh, Cornelia
(86) Internationale Anmeldenummer: PCT/EP2006/068064
(87) Internationale Veröffentlichungsnummer: WO 2007/051834

(56) Entgegenhaltungen:
- DE-A1- 4 344 585
- DE-A1- 10 151 246
- DE-U1- 20 201 979
- US-A- 4 446 678

## Beschreibung

Die Erfindung betrifft eine Zerkleinerungseinrichtung ("Megacracker") für Erntegut, enthaltend zwei gegenläufig antreibbare Zerkleinerungswalzen, welche jeweils in Axialrichtung eine gewellte Mantelfläche aufweisen und ineinandergreifend angeordnet sind.

Eine Nachzerkleinerungseinrichtung der eingangs genannten Art ist aus der DE 101 51 246 B4 bekannt. Nachzerkleinerungseinrichtungen werden in Verbindung mit von einem Schlepper gezogenen oder selbstfahrenden Feldhäckslern eingesetzt. In einem Feldhäcksler wird Erntegut wie Gras, Getreide oder Mais in ein Schneidwerkzeug eingezogen und durch Schneidvorrichtungen wie etwa eine Messertrommel oder ein Scheibenrad in kleine Stücke geschnitten. Das zerschnittene Erntegut wird dann über einen Auswurfkanal in einen Vorratsbehälter gefördert, zum Beispiel einen parallel mit dem Feldhäcksler fahrenden Anhänger. In dieser Anordnung wird in der Regel im Auswurfkanal hinter den Schneidvorrichtungen eine Nachzerkleinerungseinrichtung vorgesehen, um das Erntegut weiter zu zerkleinern. Ferner kann die Nachzerkleinerungseinrichtung dazu dienen, im Erntegut enthaltene Körner aufzubrechen.

Die aus der DE 101 51 246 B4 bekannte Nachzerkleinerungseinrichtung zeigt eine hervorragende Zerkleinerungswirkung in Bezug auf zugeführtes Mahlgut unterschiedlicher Art. Allerdings kommt es im Betrieb der Einrichtung gelegentlich zu Störfällen, welche den Arbeitsablauf unterbrechen.

Vor diesem Hintergrund war es Aufgabe der vorliegenden Erfindung, eine Zerkleinerungseinrichtung für Erntegut bereitzustellen, welche eine gute Zerkleinerungsleistung und hohe Robustheit aufweist.

Diese Aufgabe wird durch eine Zerkleinerungseinrichtung mit den Merkmalen des Anspruchs 1, eine Zerkleinerungswalze mit den Merkmalen des Anspruchs 14 sowie ein Tellerelement mit den Merkmalen des Anspruchs 15 gelöst. Vorteilhafte Ausgestaltungen sind in den Unteransprüchen enthalten.

Die erfindungsgemäße Zerkleinerungseinrichtung für Erntegut enthält gemäß einem ersten Aspekt der Erfindung zwei gegenläufig antreibbare Zerkleinerungswalzen, welche jeweils in Axialrichtung eine gewellte Mantelfläche bzw. ein Wellenprofil aufweisen und ineinandergreifend angeordnet sind. Das heißt, dass die Spitzen der Wellen der einen Zerkleinerungswalze in die Täler der Wellen der anderen Zerkleinerungswalze eingreifen und umgekehrt. Das Wellenprofil erstreckt sich vorteilhafterweise jeweils über die gesamte wirksame axiale Länge der Zerkleinerungswalzen, obwohl dies nicht zwingend der Fall sein muss. Ferner sind die Wellentäler und -berge vorzugsweise kreisförmig um die Drehachse umlaufend ausgebildet, so dass die Mantelfläche insgesamt rotationssymmetrisch ist. Die Wellenflanken an der ersten Zerkleinerungswalze haben konkave Abschnitte und die Wellenflanken an der zweiten Zerkleinerungswalze haben konvexe Abschnitte. Die Zerkleinerungseinrichtung ist dadurch gekennzeichnet, dass
a) die Wellenflanken an der ersten Zerkleinerungswalze zusätzlich zu den konkaven Abschnitten mindestens einen geraden Abschnitt haben, und/oder dass
b) die Wellenflanken an der zweiten Zerkleinerungswalze zusätzlich zu den konvexen Abschnitten mindestens einen geraden Abschnitt haben.

Anders als die bekannten Zerkleinerungswalzen mit wellenförmigem Profil sind die Wellenflanken somit nicht komplett gerade, konkav oder konvex, sondern sie weisen vielmehr eine Mischform zwischen einem gekrümmten und einem geraden Verlauf auf. Es hat sich gezeigt, dass auf diese Weise sehr viel robustere Zerkleinerungseinrichtungen gebaut werden können bei gleichbleibend hoher Zerkleinerungswirkung. Die verbesserte Robustheit ermöglicht es, die erfindungsgemäße Zerkleinerungseinrichtung nicht nur zur Nachzerkleinerung von Erntegut oder dergleichen zu verwenden, sondern auch als alleiniges Zerkleinerungsgerät.

Gemäß einer Weiterbildung der Erfindung beginnt der mindestens eine gerade Abschnitt am radial äußeren Ende der zugehörigen Wellenflanke. Mit anderen Worten bildet er den Abschluss zur Spitze eines Wellenberges. Insbesondere bei den konkaven Wellenflanken der ersten Zerkleinerungswalze ist dies von Vorteil, da hierdurch zu spitz zulaufende, brüchige Enden vermieden werden.

Bei der vorstehenden Ausführungsform hat weiterhin der sich anschließende gekrümmte Abschnitt der zugehörigen Wellenflanke am Übergang zum genannten geraden Abschnitt im Wesentlichen eine in radialer Richtung verlaufende Tangente. Der gekrümmte Abschnitt läuft dann mit größtmöglicher Steigung aus.

Gemäß einer anderen Weiterbildung der Erfindung beginnt der mindestens eine gerade Abschnitt am radial inneren Ende der zugehörigen Wellenflanke. Mit anderen Worten bildet er den Abschluss zum Boden eines Wellentales.

Die vorstehend beschriebenen Anordnungen der geraden Abschnitte werden optional dahingehend kombiniert, dass am radial äußeren und am radial inneren Ende der Wellenflanke gerade Abschnitte angeordnet sind.

Die Längenverhältnisse von geraden und gekrümmten Abschnitten sind vorteilhafterweise so, dass die zusätzlichen geraden Abschnitte weniger als 40 %, vorzugsweise weniger als 30 %, besonders bevorzugt weniger als 20 % der (in radialer Richtung gemessenen) Gesamtlänge der jeweils zugehörigen Wellenflanke ausmachen.

Gemäß einer anderen Weiterbildung der Erfindung befinden sich bei dieser Zerkleinerungseinrichtung in den Wellenflanken mindestens einer Zerkleinerungswalze im Wesentlichen radial verlaufende Einkerbungen, wobei der Querschnitt mindestens einer dieser Einkerbungen variiert. Der "Querschnitt" der Einkerbung wird dabei definitionsgemäß quer (d. h. rechtwinklig) zur Verlaufsrichtung der Einkerbung angesetzt. Die Variation des Querschnittes bedeutet, dass dieser an mindestens zwei verschiedenen Positionen entlang der Einkerbung (d. h. bei mindestens zwei verschiedenen Radien in Bezug auf die Achse der Zerkleinerungswalze) unterschiedlich ist. Die Zerkleinerungsleistung der Einrichtung kann durch einen solchen veränderlichen Querschnitt den Arbeitsbedingungen beim jeweiligen Walzenradius optimal angepasst werden.

Gemäß einer ersten speziellen Ausführungsform der vorstehend beschriebenen Zerkleinerungseinrichtung weist die variierende Einkerbung eine Schneidkante auf, welche im Bereich kleiner Radien an einer (in Laufrichtung der Zerkleinerungswalze gesehen) anderen Seite liegt als im Bereich großer Radien, wobei sich die genannten Radien jeweils auf die Drehachse der Zerkleinerungswalze beziehen. Die Schneidkante ist vorzugsweise spitzwinklig geformt, um eine entsprechende Schärfe zu erlangen. Durch den Seitenwechsel der Schneidkante wird ermöglicht, dass die an einem Punkt schneller umlaufende Zerkleinerungswalze und die kooperierende, langsamer umlaufende Zerkleinerungswalze gemeinsam eine scherenähnliche Schneidwirkung erzeugen.

Gemäß einer anderen Ausführungsform der Zerkleinerungseinrichtung weist die im Querschnitt variable Einkerbung in einem Bereich mittlerer Radien eine Unterbrechung auf. Dies bedeutet, dass der Querschnitt der Einkerbung im Bereich dieser mittleren Radien (zumindest näherungsweise) den Flächeninhalt Null hat bzw. zu einem Strich wird. Besonders bevorzugt ist es dabei, wenn Einkerbungen an beiden Zerkleinerungswalzen mit derartigen Unterbrechungen versehen sind und sich diese Unterbrechungen berühren. Weiterhin ist es besonders bevorzugt, wenn die Zerkleinerungswalzen mit mindestens einem Antrieb derart gekoppelt sind, dass sie im Bereich der Unterbrechungen der Einkerbungen mit im Wesentlichen derselben Umfangsgeschwindigkeit antreibbar sind. Mit anderen Worten liegt die Zone, in der einander berührende Punkte der gegenläufig angetriebenen Zerkleinerungswalzen in etwa die gleiche Umlaufgeschwindigkeit haben (eine solche Zone gibt es in der Regel bei jeder gattungsgemäßen Zerkleinerungseinrichtung) genau dort, wo die Einkerbungen unterbrochen sind. In diesen Zonen kann sich daher kein Erntegut in irgendwelchen Hohlräumen von Einkerbungen aufhalten. Letzteres ist bei bekannten Zerkleinerungseinrichtungen möglich und führt dort aufgrund der gegen Null gehenden Retativgeschwindigkeit zwischen den Zerkteinerungswatzen zu einer schlechten Zerkleinerungswirkung und unzerteiltem Erntegut.

Nachfolgend werden Weiterbildungen der Erfindung beschrieben, welche in ähnlicher Weise auch in der DE 101 51 246 B4 offenbart sind.

So können bei der Zerkleinerungseinrichtung die Zerkleinerungswalzen unterschiedliche mittlere, minimale und/oder maximale Radien haben. Auf diese Weise kann durch verschiedene Umfangsgeschwindigkeiten ein verbesserter Reibaufschluss von Erntegut erzielt werden.

Gemäß einer anderen Weiterbildung sind die Zerkleinerungswalzen mit mindes- ' tens einem Antrieb derart gekoppelt, dass sie mit unterschiedlicher Drehzahl antreibbar sind. Die Einstellung unterschiedlicher Drehzahlen erlaubt es, dafür zu sorgen, dass sich berührende Punkte auf den Oberflächen der Walzen unterschiedliche Umfangsgeschwindigkeiten haben, was ebenfalls zu einem verbesserten Reibaufschluss des Erntegutes führt.

Zur Vereinfachung der Konstruktion werden die Zerkleinerungswalzen vorzugsweise beide von demselben Antrieb (Motor) angetrieben, wobei die Übertragung des Antriebs auf die Walzen jedoch mit unterschiedlichen Übersetzungsverhältnissen erfolgt.

Die Wellenflanken der Zerkleinerungswalzen können in sich noch einmal profiliert sein, zum Beispiel durch radial verlaufende Einkerbungen. Durch die Profilierung kann ein starker Reißeffekt auf das Erntegut ausgeübt werden, so dass eine noch bessere Zerkleinerungswirkung erreicht wird.

Gemäß einer bevorzugten Ausgestaltung der Zerkleinerungswalzen sind diese aus in Axialrichtung gestapelten Tellerelementen aufgebaut, wobei jedes Tellerelement vorzugsweise eine Welle des Wellenprofils der Zerkleinerungswalze bildet. Ein solcher modularer Aufbau aus Tellerelementen lässt sich einerseits gut herstellen und gewährleistet andererseits, dass defekte Tellerelemente leicht gegen neue ausgetauscht werden können, so dass bei einem lokalen Schaden nicht die gesamte Zerkleinerungswalze verworfen werden muss.

Bei einer anderen Weiterbildung der Erfindung ist mindestens eine der Zerkleinerungswalzen in radialer Richtung verschiebebeweglich oder schwenkbar gelagert. Hierdurch ist es möglich, dass sich durch ein Ausschwenken der Zerkleinerungswalze in radialer Richtung der Reibspalt zwischen den Zerkleinerungswalzen vergrößert, um zum Beispiel einen harten Fremdkörper zwischen den Walzen passieren zu lassen. Typischerweise wird die verschiebebewegliche Zerkleinerungswalze mit Hilfe einer Feder unter einer vorgegebenen Spannung in radialer Richtung bis auf eine minimale Spaltbreite gegen die andere Walze gedrückt.

Ferner betrifft die Erfindung eine Zerkleinerungswalze für eine Zerkleinerungseinrichtung der oben beschriebenen Art, d. h. eine Zerkleinerungswalze, welche in Axialrichtung eine gewellte Mantelfläche bzw. ein Wellenprofil aufweist. Bevorzugte Ausgestaltungen der Zerkleinerungswalze ergeben sich aus der obigen Beschreibung der Zerkleinerungseinrichtung.

Des Weiteren betrifft die Erfindung Tellerelemente für eine Zerkleinerungswalze der vorstehend beschriebenen Art.

Im Folgenden wird die Erfindung mit Hilfe der Figuren beispielhaft erläutert. Es zeigt:
- Fig. 1: eine Aufsicht (links) und eine perspektivische Ansicht (rechts) der beiden Zerkleinerungswalzen einer erfindungsgemäßen Zerkleinerungseinrichtung;
- Fig. 2: ein profiliertes Tellerelement der ersten Zerkleinerungswalze von Figur 1 mit teilweise konkavem Wellenprofil in einer Aufsicht (links), einem seitlichen Querschnitt (rechts), und einer Vergrößerung des seitlichen Querschnitts (Mitte);
- Fig. 3: ein profiliertes Tellerelement der zweiten Zerkleinerungswalze von Figur 1 mit teilweise konvexem Wellenprofil in einer Aufsicht (links), einem seitlichen Querschnitt (rechts), und einer Vergrößerung des seitlichen Querschnitts (Mitte);
- Fig. 4: eine Aufsicht auf die beiden Zerkleinerungswalzen einer Zerkleinerungseinrichtung gemäß einer zweiten Ausführungsform der Erfindung;
- Fig. 5: ein profiliertes Tellerelement der ersten Zerkleinerungswalze von Figur 4 mit teilweise konkavem Wellenprofil in einer Seitenansicht (links), einer Aufsicht (Mitte), und einer perspektivischen Ansicht (rechts);
- Fig. 6: ein profiliertes Tellerelement der zweiten Zerkleinerungswalze von Figur 4 mit teilweise konvexem Wellenprofil in einer Seitenansicht (links), einer Aufsicht (Mitte) und einer perspektivischen Ansicht (rechts);
- Fig. 7: einen Schnitt entlang der Linie VII-VII durch eine radial außen gelegene Einkerbung des Tellerelementes von Figur 6.

Gleiche Bezugszeichen oder sich um 100 unterscheidende Bezugszeichen betreffen in den Figuren gleiche oder ähnliche Komponenten.

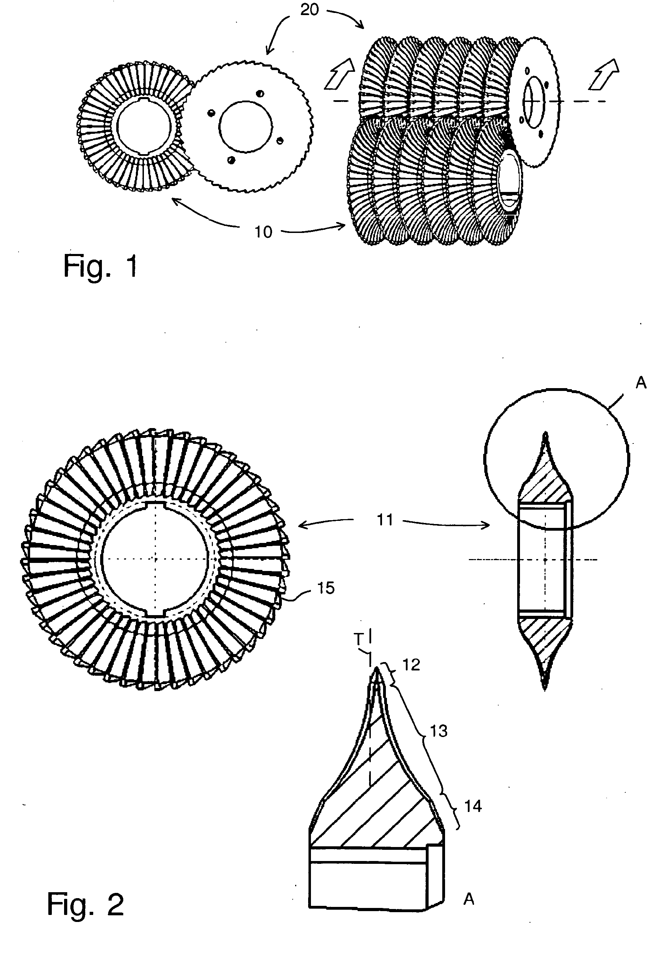

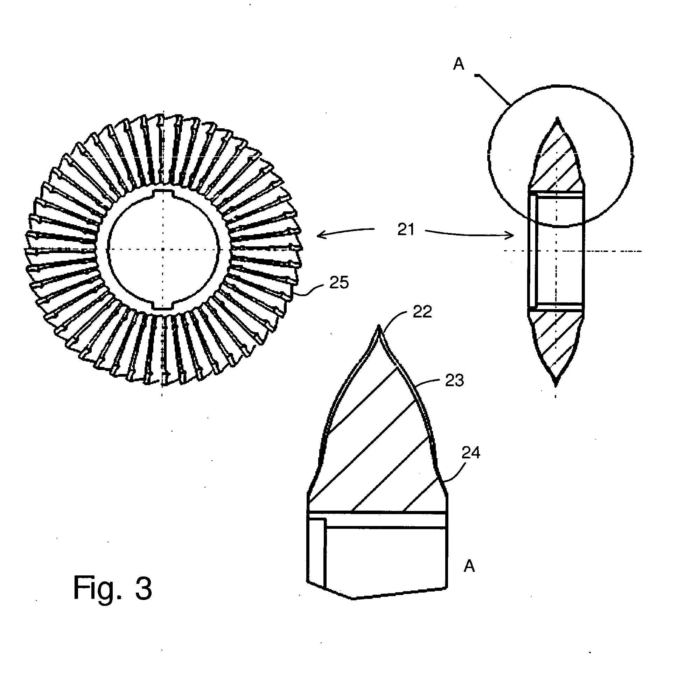

In den Figuren 1 bis 3 ist eine erste bevorzugte Ausgestaltung einer erfindungsgemäßen Zerkleinerungseinrichtung für Erntegut wie beispielsweise Mais dargestellt. Kernbestandteil dieser Einrichtung sind die in Figur 1 erkennbaren zwei Zerkleinerungswalzen 10, 20, welche von geeigneten Komponenten (nicht dargestellt) gegenläufig angetrieben werden. Blockpfeile deuten an, dass (zumindest) die Zerkleinerungswalze 20 in Radialrichtung verschiebebeweglich gelagert ist. Hierdurch ist es möglich, dass diese Walze 20 bei Eindringen eines Fremdkörpers in den Reibspalt radial ausweichen kann, um eine größere Beschädigung der Zerkleinerungswalzen durch den Fremdkörper zu vermeiden. Des Weiteren sind die Zerkleinerungswalzen 10, 20 aus einzelnen Tellerelementen 11, 21 (Figur 2, 3) zusammengesetzt. Eine detaillierte Erläuterung der grundsätzlichen Funktionsweise derartiger Zerkleinerungswalzen findet sich im Übrigen beispielsweise in der DE 101 51 246 B4.

Der entscheidende Unterschied zwischen dem Stand der Technik und der dargestellten Zerkleinerungseinrichtung ist in den Figuren 2 und 3 erkennbar. Demnach bestehen die als Reibflächen wirksamen Wellenflanken aus einer Mischform von geraden Abschnitten an den Enden und einem gekrümmten Abschnitt in der Mitte.

Bei den Tellerelementen 11 der ersten Zerkleinerungswalze 10 folgt konkret auf einen radial äußeren geraden Abschnitt 12 an der Wellenberg-Spitze der möglichst lange konkave (d. h. nach innen gekrümmte) Abschnitt 13, welcher wiederum von einem geraden Abschnitt 14 zum Boden des Wellentals hin abgeschlossen wird. In der Vergrößerung von Figur 2 ist erkennbar, dass die Tangente T an das radial äußere Ende des gekrümmten Abschnitts 13 radial verläuft, d. h. eine weitere Krümmung würde eine "überhängende" Wellenflanke erzeugen.

Bei den Tellerelementen 21 der zweiten Zerkleinerungswalze 20 folgt auf einen radial äußeren geraden Abschnitt 22 an der Wellenberg-Spitze der möglichst lange konvexe (d. h. nach außen gekrümmte) Abschnitt 23, welcher wiederum von einem geraden Abschnitt 24 zum Boden des Wellentals hin abgeschlossen wird.

Die Wellenflanken an den Tellerelementen 11, 21 sind dabei im Wesentlichen komplementär zueinander ausgebildet, um einen gleichmäßig breiten Reibspalt zwischen den Zerkleinerungswalzen 10, 20 zu gewährleisten. Ferner weisen die Tellerelemente 11, 21 in den Wellenflanken eine Profilierung auf, welche durch radial verlaufende Einkerbungen 15, 25 gebildet wird.

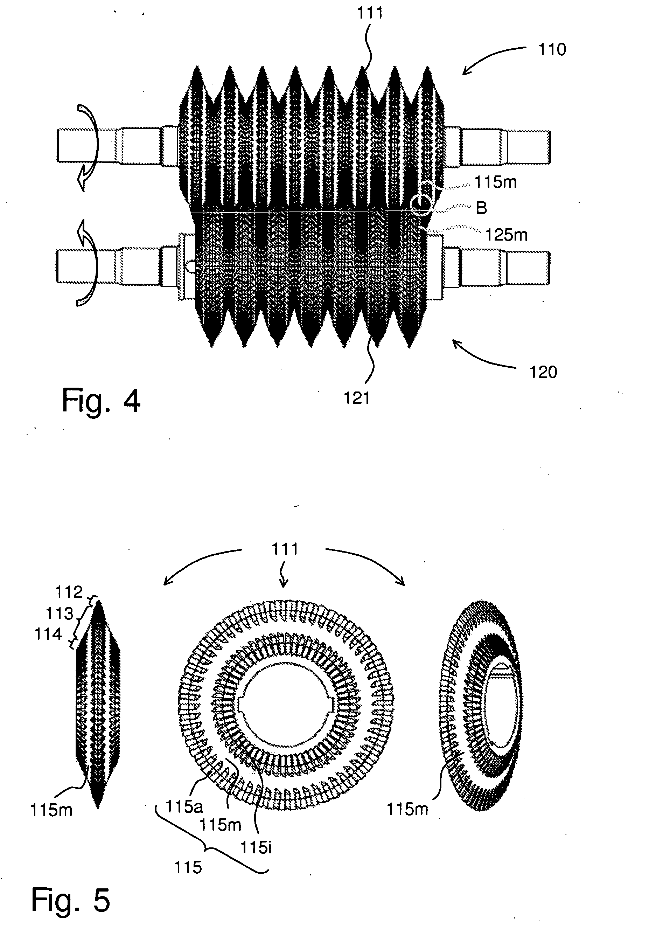

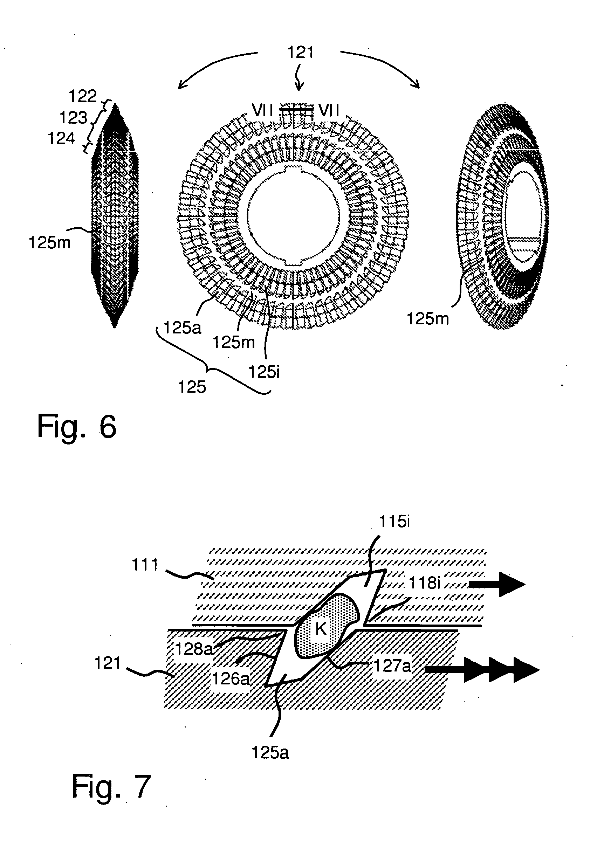

Eine Zerkleinerungseinrichtung der in den Figuren dargestellten Art lässt sich beispielsweise zur Zerkleinerung von Maiskörnern in einem Maishäcksler einsetzen. In den Figuren 4 bis 7 ist eine zweite Ausführungsform einer erfindungsgemäßen Zerkleinerungseinrichtung dargestellt. Wie bei der ersten Ausführungsform umfasst diese Zerkleinerungseinrichtung zwei gegenläufig angetriebene Zerkleinerungswalzen 110 und 120, die aus einzelnen Tellerelementen 111 bzw. 121 bestehen. Des Weiteren sind auch hier die Tellerelemente 111 der ersten Zerkleinerungswalze 110 mit Wellenflanken versehen, welche radial außen und radial innen gerade Abschnitte 112 bzw. 114 und dazwischen einen konkav gekrümmten Abschnitt 113 aufweisen (Figur 5). In ähnlicher Weise sind die Tellerelemente 121 der zweiten Zerkleinerungswalze 120 mit Wellenflanken ausgestattet, welche radial außen und radial innen gerade Abschnitte 122 bzw. 124 und dazwischen einen konvex gekrümmten Abschnitt 123 aufweisen (Figur 6). Die nachfolgend beschriebene Besonderheit der zweiten Ausführungsform ist jedoch von einer solchen Formgebung unabhängig und würde genauso beispielsweise bei kegelförmigen Tellerelementen (mit ungekrümmten Wellenflanken) erreicht.

Der wesentliche Unterschied zur ersten Ausführungsform liegt in der Profilierung, d. h. den Einkerbungen 115 bzw. 125 auf den Wellenflanken der Tellerelemente 111 bzw. 121. Diese Einkerbungen 115 bzw. 125 haben im Bereich eines mittleren Radius (gemessen von der Drehachse der Tellerelemente aus) eine Unterbrechung 115m bzw. 125m. Mit anderen Worten gibt es in dieser Zone des mittleren Radius keine Einkerbungen bzw. eine Einkerbung der Tiefe Null.

Wie aus dem eingekreisten Bereich B in Figur 4 erkennbar ist, sind die Einkerbungs-Unterbrechungen 115m und 125m gerade so angeordnet, dass sie sich bei den fertig montierten, ineinandergreifenden Zerkleinerungswalzen gegenüberliegen bzw. berühren. Des Weiteren sind die Antriebsdrehzahlen der beiden Zerkleinerungswalzen 110, 120 im bevorzugten Betrieb gerade so eingestellt, dass die Umlaufgeschwindigkeiten der Tellerelemente 111 und 121 im Berührungsbereich B der Unterbrechungen 115m, 125m in etwa gleich groß sind. Allgemein ist der relative Unterschied zwischen den Umlaufgeschwindigkeiten der Zerkleinerungswalzen 110, 120 an der Spitze eines Tellerelementes am größten. Zu kleineren Radien hin nimmt er immer mehr ab, wobei er in der Berührungszone B der Einkerbungs-Unterbrechungen sein Vorzeichen wechselt. Im Bereich B der annähernd gleichen Umlaufgeschwindigkeiten tritt keine Reißwirkung ein, so dass die Zerkleinerungsleistung hier schlecht ist und gerade kleineres Erntegut (z. B. Getreidekörner) diese Zone bei herkömmlichen Profilierungen häufig unzerkleinert passieren kann. Um dies zu verhindern, sind bei den Zerkleinerungswalzen 110, 120 die Profilierungen in der Zone gleicher Umlaufgeschwindigkeiten unterbrochen, so dass hier kein Platz für unzerteiltes, bloß mitgeschlepptes Erntegut vorhanden ist.

Eine zweite Besonderheit der Profilierungen an den Zerkleinerungswalzen 110, 120 besteht darin, dass die radial innen gelegenen Abschnitte 115i bzw. 125i der Einkerbungen gegenläufig bzw. spiegelbildlich ausgebildet sind zu den radial außen gelegenen Abschnitten 115a bzw. 125a der Einkerbungen.

Figur 7 zeigt diesbezüglich einen Querschnitt durch einen äußeren Einkerbungs-Abschnitt 125a entlang der Linie VII-VII von Figur 6. Des Weiteren ist der zugehörige Querschnitt durch den inneren Einkerbungs-Abschnitt 115i des gegenüberliegenden Tellerelementes 111 mit dargestellt. Die radial außen liegende Einkerbung 125a des Tellerelementes 121 weist einen im Wesentlichen dreieckigen oder trapezförmigen Querschnitt auf, wobei sie eine überhängende Flanke 126a und eine flache Flanke 127a besitzt. Die überhängende Flanke 126a bildet mit der "normalen" Oberfläche des Tellerelementes eine spitzwinklige Schneidkante 128a.

Die am anderen Tellerelement 111 befindliche, radial innere Einkerbung 115i hat einen ähnlichen Querschnitt, wobei jedoch die Schneidkante 118i an der in Umlaufrichtung (Pfeile) anderen Seite ausgebildet ist. Die mit Pfeilen angedeutete größere Umlaufgeschwindigkeit des Tellerelementes 121 im Vergleich zur Umlaufgeschwindigkeit des Tellerelementes 111 führt nun dazu, dass ein in den Einkerbungen liegendes Korn K von den beiden Schneidkanten 118i und 128a ähnlich wie bei einer Schere zerschnitten wird.

Bei den radial inneren Einkerbungen 125i und den zugehörigen radial äußeren Einkerbungen 115a kehrt sich die Situation von Figur 7 dahingehend um, dass dort das Tellerelement 111 die größere Umlaufgeschwindigkeit hat. Um trotzdem die beschriebene Scherenwirkung zu erzielen, sind daher die Schneidkanten in diesen Abschnitten 125i und 115a der Einkerbungen spiegelbildlich, d. h. an den in Umlaufrichtung anderen Seiten der Einkerbungen angeordnet.

Wie schon erwähnt sind im Bereich mittlerer Radien die Umlaufgeschwindigkeiten beider Zerkleinerungswalzen etwa gleich groß, so dass Körner dort nicht zerrieben oder zerschnitten werden können. Daher haben die Einkerbungen in diesem Bereich Unterbrechungen 115m, 125m, die ein Mitschleppen von Erntegut verhindern.

Die beschriebenen Zerkleinerungseinrichtungen garantieren eine sichere Zerkleinerung von allen Arten von Getreidekörnern, Mais oder sonstigen Hülsenfrüchten wie beispielsweise Ackerbohnen, Erbsen, Raps oder dergleichen.
- 10, 110: erste Zerkleinerungswalze
- 11, 111: Tellerelemente der ersten Zerkleinerungswalze
- 12, 112: radial äußerer gerader Abschnitt
- 13, 113: konkaver Abschnitt
- 14, 114: radial innerer gerader Abschnitt
- 15, 115: Einkerbung
- 115i: radial innen gelegene Einkerbung
- 115m: bei mittlerem Radius gelegene Unterbrechung der Einkerbung
- 115a: radial außen gelegene Einkerbung
- 118i: Schneidkante
- 20, 120: zweite Zerkleinerungswalze
- 21, 121: Tellerelement der zweiten Zerkleinerungswalze
- 22, 122: radial äußerer gerader Abschnitt
- 23, 123: konvexer Abschnitt
- 24, 124: radial innerer gerader Abschnitt
- 25, 125: Einkerbung
- 125i: radial innen gelegene Einkerbung
- 125m: bei mittlerem Radius gelegene Unterbrechung der Einkerbung
- 125a: radial außen gelegene Einkerbung
- 126a: überhängende Flanke der Einkerbung
- 127a: flache Flanke der Einkerbung
- 128a: Schneidkante

## Patentansprüche

1. Zerkleinerungseinrichtung für Erntegut, enthaltend zwei gegenläufig antreibbare und aus in Axialrichtung gestapelten Zellerelementen bestehenden Zerkleinerungswalzen (10, 20), welche jeweils in Axialrichtung eine gewellte Mantelfläche aufweisen und ineinandergreifend angeordnet sind, wobei die Wellenflanken an der ersten Zerkleinerungswalze (10) konkave Anschnitte (13) und die Wellenflanken an der zweiten Zerkleinerungswalze (20) konvexe Abschnitte (23) haben,
**dadurch gekennzeichnet, dass**
die Wellenflanken an der ersten und/oder an der zweiten Zerkleinerungswalze (10, 20) zusätzlich mindestens einen geraden Abschnitt (12, 14, 22, 24) haben.

2. Zerkleinerungseinrichtung nach Anspruch 1,
**dadurch gekennzeichnet, dass**
der gerade Abschnitt (12, 22) am radial äußeren Ende der zugehörigen Wellenflanke beginnt.

3. Zerkleinerungseinrichtung nach Anspruch 2,
**dadurch gekennzeichnet, dass**
der gekrümmte Abschnitt (13) der zugehörigen Wellenflanke am Übergang zum genannten geraden Abschnitt (12) im Wesentlichen eine in radialer Richtung verlaufende Tangente (T) hat.

4. Zerkleinerungseinrichtung nach mindestens einem der Ansprüche 1 bis 3,
**dadurch gekennzeichnet**, das
der gerade Abschnitt (14, 24) am radial inneren Ende der zugehörigen Wellenflanke beginnt.

5. Zerkleinerungseinrichtung nach mindestens einem der Ansprüche 1 bis 4,
**dadurch gekennzeichnet, dass**
am radial äußeren und am radial inneren Ende der Wellenflanke gerade Abschnitte (12, 14, 22, 24) angeordnet sind.

6. Zerkleinerungseinrichtung nach mindestens einem der Ansprüche 1 bis 5,
**dadurch gekennzeichnet, dass**
die zusätzlichen geraden Abschnitte (12, 14, 22, 24) weniger als 40%, vorzugsweise weniger als 30%, besonders bevorzugt weniger als 20% der Gesamtlänge der zugehörigen Wellenflanke ausmachen.

7. Zerkleinerungseinrichtung für Erntegut, nach einem der Ansprüche 1 bis 6,
**dadurch gekennzeichnet, dass**
die Wellenflanken mindestens einer Zerkleinerungswalze (110, 120) im Wesentlichen radial verlaufende Einkerbungen (115, 125) aufweisen, wobei der Querschnitt mindestens einer Einkerbung variiert.

8. Zerkleinerungseinrichtung nach Anspruch 7,
**dadurch gekennzeichnet, dass**
die variierende Einkerbung eine vorzugsweise spitzwinklige Schneidkante (118), 128a) aufweist, welche im Bereich kleiner Radien in Laufrichtung der Zerkleinerungswalze gesehen an einer anderen Seite der Einkerbung liegt als im Bereich großer Radien.

9. Zerkleinerungseinrichtung nach Anspruch 7 oder 8,
**dadurch gekennzeichnet, dass** die variierende Einkerbung in einem Bereich mittlerer Radien eine Unterbrechung (115m, 125m) aufweist.

10. Zerkleinerungseinrichtung nach Anspruch 9,
**dadurch gekennzeichnet, dass**
sich die Unterbrechungen (115m, 125m) von Einkerbungen beider Zerkleinerungswalzen (110, 120) berühren.

11. Zerkleinerungseinrichtung nach Anspruch 10,
**dadurch gekennzeichnet, dass**
die Zerkleinerungswalzen (110, 120) mit mindestens einem Antrieb derart gekoppelt sind, dass sie im Bereich (B) der Unterbrechungen (115m, 125m) von Einkerbungen mit im Wesentlichen derselben Umfangsgeschwindigkeit antreibbar sind.

12. Zerkleinerungseinrichtung nach mindestens einem der Ansprüche 1 bis 11,
**dadurch gekennzeichnet, dass**
die Zerkleinerungswalzen (10, 20) mit mindestens einem Antrieb derart gekoppelt sind, dass sie mit unterschiedlicher Drehzahl antreibbar sind.

13. Zerkleinerungseinrichtung nach mindestens einem der Ansprüche 1 bis 12,
**dadurch gekennzeichnet, dass**
die Zerkleinerungswalzen unterschiedliche mittlere, minimale und/oder maximale Radien haben.

14. Zerkleinerungswalze (10, 20) für eine Zerkleinerungseinrichtung nach mindestens einem der Ansprüche 1 bis 13.

15. Tellerelement (11, 21) für eine Zerkleinerungswalze (10, 20) nach Anspruch 14.

## Claims

1. Comminution device for harvested crops, containing two comminution rollers (10, 20) that are drivable in opposite directions and comprise disk elements stacked in axial direction and have in each case in axial direction a wave-shaped surface and are disposed in an intermeshing manner, wherein the wave flanks on the first comminution roller (10) have concave portions (13) and the wave flanks on the second comminution roller (20) have convex portions (23),
**characterized in that**
the wave flanks on the first and/or on the second comminution roller (10, 20) additionally have at least one straight portion (12, 14, 22, 24).

2. Comminution device according to claim 1,
**characterized in that**
the straight portion (12, 22) starts at the radially outer end of the associated wave flank.

3. Comminution device according to claim 2,
**characterized in that**
the curved portion (13) of the associated wave flank has at the transition to the said straight portion (12) substantially a tangent (T) extending in radial direction.

4. Comminution device according to at least one of claims 1 to 3,
**characterized in that**
the straight portion (14, 24) starts at the radially inner end of the associated wave flank.

5. Comminution device according to at least one of claims 1 to 4,
**characterized in that**
at the radially outer end and at the radially inner end of the wave flank straight portions (12, 14, 22, 24) are disposed.

6. Comminution device according to at least one of claims 1 to 5,
**characterized in that**
the additional straight portions (12, 14, 22, 24) make up less than 40%, preferably less than 30%, particularly preferably less than 20% of the total length of the associated wave flank.

7. Comminution device for harvested crops, according to one of claims 1 to 6,
**characterized in that**
the wave flanks of at least one comminution roller (110, 120) have substantially radially extending indentations (115, 125), wherein the cross section of at least one indentation varies.

8. Comminution device according to claim 7,
**characterized in that**
the varying indentation has a preferably acute-angled cutting edge (118i, 128a), which in the region of small radii viewed in the running direction of the comminution roller lies at a different side of the indentation from in the region of large radii.

9. Comminution device according to claim 7 or 8,
**characterized in that** the varying indentation in a region of mean radii has an interruption (115m, 125m).

10. Comminution device according to claim 9,
**characterized in that**
the interruptions (115m, 125m) of indentations of both comminution rollers (110, 120) are in mutual contact.

11. Comminution device according to claim 10,
**characterized in that**
the comminution rollers (110, 120) are coupled to at least one drive in such a way that they can be driven at substantially the same peripheral speed in the region (B) of the interruptions (115m, 125m) of indentations.

12. Comminution device according to at least one of claims 1 to 11,
**characterized in that**
the comminution rollers (10, 20) are coupled to at least one drive in such a way that they may be driven at a different rotational speed.

13. Comminution device according to at least one of claims 1 to 12,
**characterized in that**
the comminution rollers have different mean, minimum and/or maximum radii.

14. Comminution roller (10, 20) for a comminution device according to at least one of claims 1 to 13.

15. Disk element (11, 21) for a comminution roller (10, 20) according to claim 14.

## Revendications

1. Dispositif de broyage de produit récolté, comprenant deux cylindres broyeurs (10, 20) qui peuvent être entraînés dans des sens opposés, sont constitués d'éléments discoïdaux regroupés dans la direction axiale, sont respectivement pourvus d'une surface d'enveloppe ondulée, dans la direction axiale, et sont agencés avec interpénétration, les flancs des ondulations présentant des régions concaves (13), sur le premier cylindre broyeur (10), et les flancs desdites ondulations offrant des régions convexes (23) sur le second cylindre broyeur (20),
**caractérisé par le fait que**
les flancs des ondulations sont additionnellement munis d'au moins une région rectiligne (12, 14, 22, 24) sur le(s) premier et/ou second cylindre(s) broyeur(s) (10, 20).

2. Dispositif de broyage selon la revendication 1,
**caractérisé par le fait que**
la région rectiligne (12, 22) débute à l'extrémité radialement extérieure du flanc d'ondulation associé.

3. Dispositif de broyage selon la revendication 2,
**caractérisé par le fait que**
la région courbe (13) du flanc d'ondulation associé trace pour l'essentiel, à la transition avec la région rectiligne (12) précitée, une tangente (T) s'étendant dans la direction radiale.

4. Dispositif de broyage selon au moins l'une des revendications 1 à 3,
**caractérisé par le fait que**
la région rectiligne (14, 24) débute à l'extrémité radialement intérieure du flanc d'ondulation associé.

5. Dispositif de broyage selon au moins l'une des revendications 1 à 4,
**caractérisé par le fait que**
des régions rectilignes (12, 14, 22, 24) sont disposées aux extrémités radialement extérieure et radialement intérieure du flanc d'ondulation.

6. Dispositif de broyage selon au moins l'une des revendications 1 à 5,
**caractérisé par le fait que**
les régions rectilignes additionnelles (12, 14, 22, 24) représentent moins de 40 %, de préférence moins de 30 % et, avec préférence particulière, moins de 20 % de la longueur totale du flanc d'ondulation associé.

7. Dispositif de broyage de produit récolté, selon au moins l'une des revendications 1 à 6,
**caractérisé par le fait que**
les flancs des ondulations d'au moins un cylindre broyeur (110, 120) comportent des encoches (115, 125) s'étendant pour l'essentiel dans le sens radial, avec variation de la section transversale d'au moins une encoche.

8. Dispositif de broyage selon la revendication 7,
**caractérisé par le fait que**
l'encoche présentant une variation possède une arête tranchante (118i, 128a) décrivant, de préférence, un angle aigu et située, dans la zone à petits rayons en considérant la direction de déplacement du cylindre broyeur, sur un côté de l'encoche autre que dans la zone à grands rayons.

9. Dispositif de broyage selon la revendication 7 ou 8,
**caractérisé par le fait que**
l'encoche présentant une variation comporte une discontinuité (115m, 125m) dans une zone à rayons moyens.

10. Dispositif de broyage selon la revendication 9,
**caractérisé par le fait que**
les discontinuités (115m, 125m) d'encoches des deux cylindres broyeurs (110, 120) sont mutuellement en contact.

11. Dispositif de broyage selon la revendication 10,
**caractérisé par le fait que**
les cylindres broyeurs (110, 120) sont couplés à au moins un entraînement, de façon telle qu'ils puissent être entraînés avec vitesse périphérique pour l'essentiel identique dans la zone (B) des discontinuités (115m, 125m) situées sur des encoches.

12. Dispositif de broyage selon au moins l'une des revendications 1 à 11,
**caractérisé par le fait que**
les cylindres broyeurs (110, 120) sont couplés à au moins un entraînement, de façon telle qu'ils puissent être entraînés avec vitesse angulaire différente.

13. Dispositif de broyage selon au moins l'une des revendications 1 à 12,
**caractérisé par le fait que**
les cylindres broyeurs possèdent différents rayons moyens, minimaux et/ou maximaux.

14. Cylindre broyeur (10, 20) destiné à un dispositif de broyage conforme à au moins l'une des revendications 1 à 13.

15. Elément discoïdal (11, 21) destiné à un cylindre broyeur (10, 20) conforme à la revendication 14.
